# EUROPEAN PATENT APPLICATION

(11) **EP 0 526 085 A1**
(43) Date of publication of application: **03.02.1993**
(21) Application number: 92306686.4
(22) Date of filing: 22.07.1992
(51) Int. Cl.: B23P 19/00, B65G 47/92, B25B 23/04

(54) **Parts feeding apparatus**

(30) Priority: 27.07.1991 JP 276094/91
(71) Applicant: Aoyama, Yoshitaka, Sakai-shi, Osaka 590-01 (JP)
(72) Inventor: Aoyama, Yoshitaka, Sakai-shi, Osaka 590-01 (JP)
(74) Representative: Tillbrook, Christopher John

(57) **Abstract**

A parts feeding apparatus for feeding parts to a predetermined location comprises a feed rod (1) mounted for reciprocating movement between a retracted position spaced away from the predetrmined location and a second position adjacent the predetermined location. The feed rod (1) has a part receiving hole (6) formed therein and a device (7) for holding the part within the hole. A feeding member (8), capable of advancing and retracting, turning, and parallel movements, is provided for transferring parts (3) to a position on an axis of path (2) of the reciprocating movement of the feed rod (1). The feeding member has a device (9) for holding a part (3) in position on the feeding member (8), the holding force imparted to the part (3) is nullified when the feeding member (8) retracts away from the feed rod (1).

## Description

### BACKGROUND OF THE INVENTION

### Field of the Invention

The invention relates to a parts feeding apparatus of the type in which a reciprocating feed rod carries a part to a predetermined location.

### Related Art

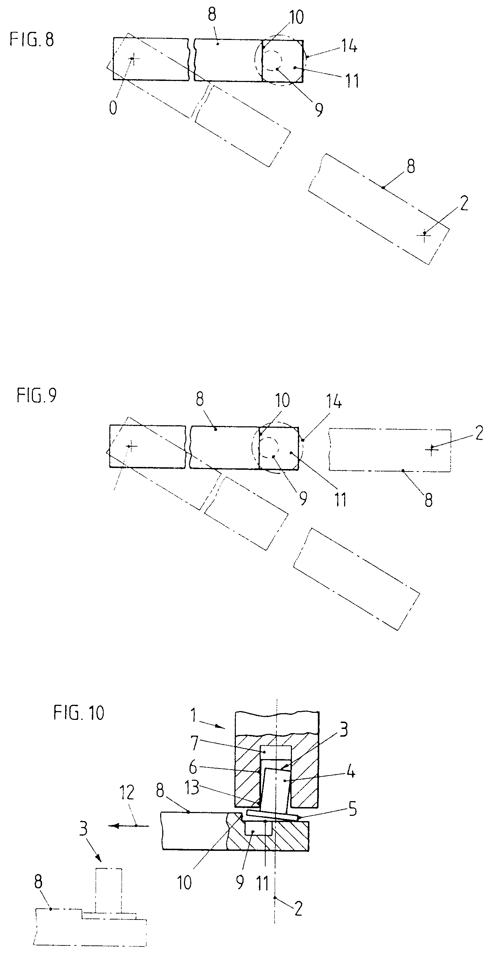

As far as I investigated the published literature, no prior art relevant to the invention has been located to my knowledge, but I had previously developed such a device as shown in Fig. 10, where a feed rod 1 is mounted for reciprocating movement along its longitudinal axis 2 (hereinafter, referred to simply as axis of path 2) to carry a part 3 to a predetermined location, the part herein being an iron-made projection bolt (projections for fusion is omitted from the illustration) consisting of a stem or shunk 4 and a head or flange 5. A hole 6 for receiving the shunk 4 is formed in the feed rod 1, and at its inner end is installed a magnet (permanent magnet) 7 for magnetically holding the part. The feeding member 8 has a tread or mounting surface 11 recessed therein and terminating at a riser 10, with a magnet (permanent magnet) 9 being embedded for magnetically holding the part 3 in position on the mounting surface. From the position indicated in phantom lines, the feeding member 9 advances rightward until the shunk 4 is coaxial with the axis of the path 2, and then it moves upward so that the shunk 4 is inserted in the hole 6 and is held by a magnetic attractive force of the magnet 7. Subsequently, the feeding member 8 retracts leftward, whereupon the feed rod 1, with the part 3 retained within the hole 6, advances towards the destination to complete the feeding of the part.

Fig. 10 shows the feeding member 8 on its way of retraction as indicated by arrow 12. At this time the magnetic force exerted by the magnet 9 remains effective on the part 3, thereby causing the part 3 to be inclined as shown, and in particular the shunk 5 is forcibly pressed against the opening edge area 13 of the hole 6. Consequently, the edge area 13 is abnormally expanded, worn, or extremely deformed (for example, the round hole becoming elliptical), resulting in the part being held misaligned by the feed rod 1 and parts feeding with less operational reliability.

### SUMMARY OF THE INVENTION

The invention is hence presented to solve the above problems, and claim 1 is directed to a parts feeding apparatus for feeding parts to a predetermined location comprising a feed rod mounted for reciprocating movement between a retracted position spaced away from said location and a second position adjacent said location, said feed rod having a part receiving hole formed therein, a feeding member for transferring parts to a position on an axis of path of said reciprocating movement of said feed rod, means for holding a part in position on said feeding member, means for nullifying holding force exerted by said means for holding, and means for holding a part within said hole in the feed rod. The parts holding force of the feeding member is nullified wherever the feeding member retracts, so that the part will not be pressed against the inner wall of the parts receiving hole. According to claim 2, it is intended to obviate interference with peripheral components by making the feeding member capable of various movements. Claim 3 defines that the part is held in position on the feeding member by magnetic attractive force exerted by a permanent magnet or an electromagnet.

According to the invention, the holding force imparted to the part by the holding means disposed on the feeding member is nullified when the feeding member retracts away from the feed rod, and therefore, the part is in no way forcibly pressed against the part receiving hole. Thus, the problems which would otherwise be encountered have been solved. Besides, since the movement of the feeding member can take various forms such as advancing and retracting, turning and parallel movements, an optimum operation pattern without interference with surrounding components and possible obstacles can be easily set up. By the use of magnetic force for holding the parts, nullification of the holding force is realized without difficulty.

### BRIEF DESCRIPTION OF THE DRAWINGS

Fig. 1 is a side elevation in part in longitudinal section of the entire structure embodying the invention.

Fig. 2 is a partial longitudinal sectional view of the structure in an operating state.

Fig. 3 is a plan view of the feeding member.

Fig. 4 is a longitudinal sectional view showing a modified example of the feed rod.

Fig. 5 is a partial longitudinal sectional view of the feed rod using an electromagnet.

Fig. 6 is a side view in part broken away of the feeding member using an electromagnet.

Fig. 7 is a side view of the feed rod in the form of a movable electrode of a projection welding machine.

Fig. 8 is a schematic plan view showing a form of operation patterns of the feeding member.

Fig. 9 is a schematic plan view showing another form of operation patterns of the feeding member.

Fig. 10 is a longitudinal sectional view showing the related art.

### Preferred Embodiments of the Invention

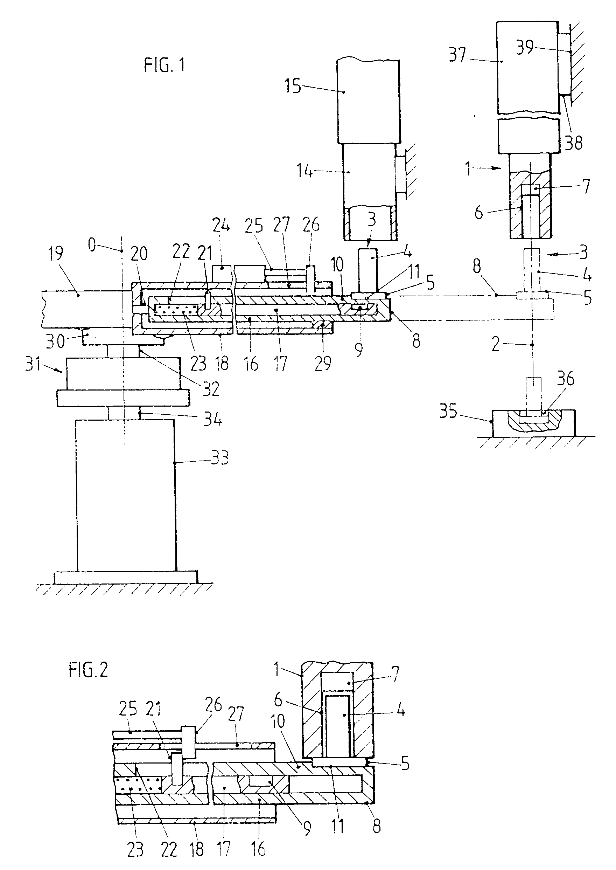

Referring to an embodiment shown in Fig. 1 through Fig. 3, members functioning the same as those shown in Fig. 10 are identified with the same reference numerals, while detailed descriptions thereof will be omitted. In this embodiment, too, the part 3 is a projection bolt just as in the case previously described. The feeding member 8 shown by solid line in Fig. 1 is in its most retracted position. A parts feeding pipe 14 is disposed just above the mounting surface 11, and a feed hose 15 leading to a parts feeder (not shown) is connected to the feeding pipe.

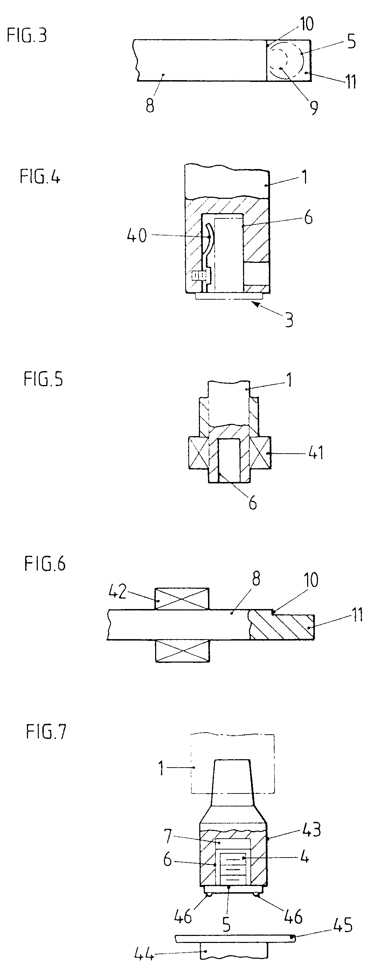

In order to nullify the magnetic attractive force on the part exerted by the magnet 9 in the feeding member 8, in the illustrated example, the magnet 9 is designed to be movable within the feeding member 8. That is, the feeding member 8 comprises a hollow shaft 16 and an inner shaft 17 slidably inserted therein, and these shafts are put in an outer tube 18 as shown. An air cylinder 19, coupled to the left end of the outer tube 18, has its piston rod 20 connected to the left end of the hollow shaft 16. A control pin 21 is fixed to the inner shaft 17 and projects through an elongate opening 22 formed in the hollow shaft 16 and extending in the direction of advancing and retracting movements of the hollow shaft. A coil spring 23 housed in the hollow shaft 16 urges the inner shaft 17, and hence the control pin 21, to abut against the right end of the slot 22. In this state the magnet 9 embedded in the inner shaft 17 is situated aside to the left to be out of alignment with the axis of the part 3 (see Fig. 3). Outside the outer tube 18, an air cylinder 24 is fixed, and an engaging piece 26 is fixed to its piston rod 25 so that the engaging piece 26 extends into the outer tube 18 through an axially extending elongate opening 27 formed in the outer tube 18. The relative positions of the control pin 21 and engaging piece 26 are such that when the feeding member 8 has made its predetermined stroke, the control pin 21 comes immediately in front of the engaging piece 26. A support piece 29 is fixed on the inner wall of the outer tube 18 to support the feeding member 8 from beneath.

A plate 30 is so welded as to couple the air cylinder 19 and the outer tube 18 together, and an output shaft 32 of a rotary motor 31 is connected to the substrate 30. The rotary motor 31 is mounted on a piston rod 34 installed under the rotary motor 31. The rotary motor 31 may be of the type conventionally known, either pneumatic or hydraulic, with a cylindrical casing and a vaned rotor housed therein. The feeding member 8, together with the outer tube 18, turns in a horizontal plane about an axis of rotation 0 of the motor 31.

In order to enhance the magnetic force of the magnets 9, 7 on the part 3, the hollow shaft 16, inner shaft 17, feed rod 1 and others may preferably be of a nonmagnetic material such as stainless steel. Coaxially with the feed rod 1, a mating part 35 is disposed so that the part 3 is finally received in a recess 36 formed therein. The feed rod 1 is actuated by an air cylinder 37, which is fixed to a stationary member 39 through a bracket 38.

The operation of this embodiment will now be described. The feeding member 8 advances rightward from the position indicated by solid line in Fig. 1 until the shunk 4 is coaxial with the axis of path 2. In succession, the feeding member 8 is moved parallel upward by the air cylinder 33 with the part 3 held by the attractive force of the magnet 9, and as it reaches the hole 6 the part 3 is subject to the attractive force of the magnet 7. As the air cylinder 24 pulls the engaging piece 26 to the left, its displacement is transmitted via the control pin 21 and inner shaft 17 to the magnet 9, thereby spacing the magnet 9 from the flange 5 of the part as shown in Fig. 2, and hence the attractive force so far acted on the part disappears. Subsequently, the feeding member 8 is turned by the output of the rotary motor 31 in a horizontal plane, with no, or only litte if any, torque being imparted to the flange 5 since there remains no magnetic attractive force on the mounting surface 11. Then, the feed rod 1 descends while holding the part 3, so that the part 3 is received (press-fit in the shown example) into the recess 36 in the mating part. The subsequent restoring is done following the reverse sequence of the above operation. The operation pattern described herein is schematically illustated in Fig. 9. Alternatively, such an operation pattern as shown in Fig. 8 may also be easily realized by selecting the operating sequence of the cylinders and rotary motor.

Fig. 4 shows a modified example of the parts holding means in the feed rod 1, using a leaf spring 40 fixed in the hole 6.

In Fig. 5 and Fig. 6, holding force is imparted to the feed rod 1 and feeding member 8 by an electromagnet, in which iron-made feed rod 1 and feeding member 8 extend through excitation coils 41, 42, respectively. In this case, the magnetic attractive force can be removed by cutting off the current to the coils.

Fig. 7 shows an embodiment of the invention applied to a projection welding machine, in which a movable electrode 43 is fixed to the front end of the feed rod 1, and a steel plate part 45 is mounted on a fixed electrode 44. Numeral 46 denotes projections for fusion formed on the flange 5.

## Claims

1. A parts feeding apparatus for feeding parts to a predetermined location comprising a feed rod mounted for reciprocating movement between a retracted position spaced away from said location and a second position adjacent said location, said feed rod having a part receiving hole formed therein, a feeding member for transferring parts to a position on an axis of path of said reciprocating movement of said feed rod, means for holding a part in position on said feeding member, means for nullifying holding force exerted by said means for holding, and means for holding a part within said hole in the feed rod.

2. A parts feeding apparatus according to claim 1, wherein said feeding member is capable of one or combination of advancing and retracting, turning, and parallel movements.

3. A parts feeding apparatus according to claim 1, wherein said means for holding parts in position on said feeding member is constituted by permanent magnet or electromagnet.
